**Europäisches Patentamt**

**European Patent Office**

**Office européen des brevets**

(19)

(11) Veröffentlichungsnummer: **0 269 075**

**A1**

# (12) EUROPÄISCHE PATENTANMELDUNG

(21) Anmeldenummer: **87117338.1**

(22) Anmeldetag: **25.11.87**

(51) Int. Cl.⁴: **H04N 13/00**

(30) Priorität: **28.11.86 DE 3640731**

(43) Veröffentlichungstag der Anmeldung:
**01.06.88 Patentblatt 88/22**

(84) Benannte Vertragsstaaten:
**AT BE CH DE ES FR GB IT LI NL SE**

(71) Anmelder: **Standard Elektrik Lorenz
Aktiengesellschaft
Lorenzstrasse 10
D-7000 Stuttgart 40(DE)**

(84) **DE**

(71) Anmelder: **Alcatel N.V.
Strawinskylaan 537 (World Trade Center)
NL-1077 XX Amsterdam(NL)**

(84) **BE CH ES FR GB IT LI NL SE AT**

(72) Erfinder: **Andrich, Wolfgang, Dr.
Im Brünnlislehen 30
D-7530 Pforzheim-Büchenbronn(DE)**

(74) Vertreter: **Pohl, Heribert, Dipl.-Ing et al
Standard Elektrik Lorenz AG Patent- und
Lizenzwesen Postfach 30 09 29
D-7000 Stuttgart 30(DE)**

(54) **Anordnung zum Übertragen stereoskopischer Videobilder.**

(57) Die Anordnung weist folgende Bestandteile auf:
eine Videokamera (1), die mit einer Wiedergabeeinrichtung (4) verbunden ist;
zwei optische Strecken (6, 7), über die von zwei verschiedenen Punkten aus aufgenommene Abbildungen des zu betrachtenden Objekts zu dem Objektiv 5 der Videokamera (1) gelangen;
eine der Wiedergabeeinrichtung nachgeschaltete optische Verzweigung (20), über die die wiedergegebenen Videobilder auf getrennten optischen Strecken (30, 31) zu den beiden Augen (32, 33) eines Betrachters gelangen;
ein erstes und ein zweites optisches Ventil (12, 14), die jeweils in einer der beiden optischen Strecken (6, 7) vor der Videokamera (1) liegen und die von einer Steuereinrichtung (16) abwechselnd durchlässig und undurchlässig geschaltet werden;
sowie ein drittes und ein viertes optisches Ventil (25, 26), die jeweils in einer der beiden optischen Strecken zwischen der Wiedergabeeinrichtung (4) und den Augen des Betrachters liegen, und die von der Steuereinrichtung (16) synchron mit dem ersten bzw. zweiten optischen Ventil (12, bzw 14) abwechselnd durchlässig und undurchlässig geschaltet werden.

## Anordnung zum Übertragen stereoskopischer Videobilder

Die Erfindung betrifft eine Anordnung zum Übertragen stereoskopischer Videobilder. Um Video-oder Fernsehbilder stereoskopisch wiedergeben zu können, müssen dem linken und dem rechten Auge eines Betrachters zwei verschiedene Videobilder zugeführt werden, die von zwei getrennten Aufnahmepunkten aus von je einer Videokamera aufgenommen werden. Die auf zwei getrennte Wiedergabeeinrichtungen, z.B. Fernsehbildschirme, übertragenen Videobilder müssen getrennt jeweils einem Auge des Betrachters zugeführt werden. Die Trennung kann z.B. durch verschieden gefärbte Brillengläser oder durch Polarisationsfilter unterschiedlicher Polarisationsebenen erfolgen.

Der Erfindung liegt die Aufgabe zugrunde, den für eine stereoskopische Bildwiedergabe erforderlichen Aufwand zu verringern.

Diese Aufgabe wird erfindungsgemäß durch eine Anordnung zum Übertragen stereoskopischer Videobilder gelöst, die folgende Bestandteile aufweist:

a. eine Videokamera, die mit einer Wiedergabeeinrichtung verbunden ist,

b. zwei optische Strecken, über die von zwei verschiedenen Punkten aus aufgenommene Abbildungen des zu betrachtenden Objekts zu dem Objektiv der Videokamera gelangen,

c. eine der Wiedergabeeinrichtung nachgeschaltete optische Verzweigung, über die die wiedergegebenen Videobilder auf getrennten optischen Strecken zu den beiden Augen eines Betrachters gelangen,

d. ein erstes und ein zweites optisches Ventil, die jeweils in einer der beiden optischen Strecken vor der Videokamera liegen und die von einer Steuereinrichtung abwechselnd durchlässig und undurchlässig geschaltet werden,

e. ein drittes und ein viertes optisches Ventil, die jeweils in einer der beiden optischen Strecken zwischen der Wiedergabeeinrichtung und den Augen des Betrachters liegen, und die von der Steuereinrichtung synchron mit dem ersten bzw. dem zweiten optischen Ventil abwechselnd durchlässig und undurchlässig geschaltet werden.

Besonders einfach aufgebaut ist eine solche Anordnung, bei der die optischen Ventile Flüssigkristallelemente enthalten. Sie können aber auch PLZT-(Blei-Lanthan-Zirkonat-Titanat-)Keramikelemente enthalten. Dadurch, daß die erfindungsgemäße Anordnung nur eine einzige Wiedergabeeinrichtung benötigt, ist es auch möglich, diese an einer Halterung zu befestigen, die der Betrachter auf seinem Kopf tragen kann.

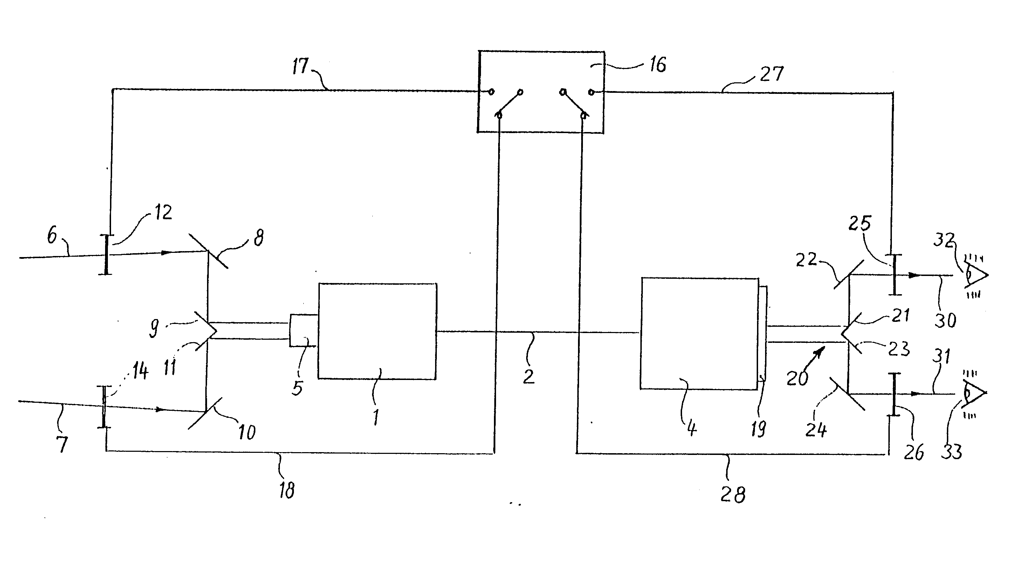

Ein Ausführungsbeispiel der Erfindung wird im folgenden anhand der Zeichnung erläutert. Die einzige Figur zeigt eine erfindungsgemäße Anordnung zum Übertragen stereoskopischer Videobilder in schematisierter Darstellung.

Eine Videokamera 1 ist durch ein Kabel 2 mit einer Wiedergabeeinrichtung 4 verbunden, die z.B. als Videomonitor mit einer Kathodenstrahlröhre oder mit einem flachen Bildschirm ausgebildet ist. Zwei optische Strecken 6 und 7 führen von einem in der Zeichnung nicht dargestellten Objekt zu dem Objektiv 5 der Videokamera 1. Um einem Betrachter ein stereoskopisches oder räumliches Videobild liefern zu können, muß das zu betrachtende Objekt von zwei getrennten Punkten aus aufgenommen werden. Die von dem einen Punkt aus aufgenommenen Videobilder werden dem einen Auge des Betrachters, die von dem anderen Punkt aus aufgenommenen Videobilder dem zweiten Auge des Betrachters zugeführt werden. Anstelle der dazu üblicherweise notwendigen zwei Videokameras wird bei der erfindungsgemäßen Anordnung das Objekt über die optischen Strecken 6 und 7 auf das Objektiv 5 der Videokamera 1 abgebildet.

In der optischen Strecke 6, die etwa das für das rechte Auge des Betrachters bestimmte Videobild liefert, lenken zwei Spiegel 8 und 9 die Lichtstrahlen auf dem Weg vom Objekt zum Objektiv 5 um. Auf der optischen Strecke 7, die das Bild für das linke Auge des Betrachters liefert, lenken zwei Spiegel 10 und 11 die Lichtstrahlen um.

In der optischen Strecke 6 liegt ein erstes optisches Ventil 12, in der optischen Strecke 7 ein zweites optisches Ventil 14. Diese beiden optischen Ventile 12, 14 werden von einer Steuereinrichtung 16 gesteuert, die mit ihnen über eine Steuerleitung 17 bzw. eine Steuerleitung 18 verbunden ist. Dabei werden die beiden optischen Ventile 12, 14 abwechselnd durchlässig und undurchlässig geschaltet. Die Umschaltung erfolgt mindestens 25 mal in der Sekunde, so daß sie von dem menschlichen Auge nicht wahrgenommen wird.

Die optischen Ventile 12, 14 enthalten als Ventilelemente entweder Flüssigkristallzellen oder PLZT-Keramikelemente. Beide Arten von Ventilelementen lassen sich durch Anlegen von Spannungen lichtdurchlässig oder -undurchlässig schalten. Durch die doppelbrechenden PLZT-Elemente kann die Polarisationsebene eines Lichtstrahles gedreht werden. Das in einem Polarisator polarisierte Licht kann dann einen Analysator nicht mehr durchqueren.

Das rechte und das linke Videobild werden somit sequentiell von der Videokamera 1 über das Kabel 2 zu der Wiedergabeeinrichtung 4 übertragen und über deren Bildschirm 19 wiedergegeben. über eine Verzweigung 20 gelangen sie von dort zu den beiden Augen des Betrachters. Zwei Spiegel 21 und 22 bilden die eine (z.B. rechte) optische Strecke der Verzweigung 20, zwei Spiegel 23. 24 bilden deren andere (z.B. linke) optische Strecke. Ein drittes optisches Ventil 25 und ein viertes optisches Ventil 26 werden durch die Steuereinrichtung 16 über Steuerleitungen 27 bzw. 28 angesteuert. Das optische Ventil 25 wird synchron mit dem optischen Ventil 12 und das optische Ventil 26 synchron mit dem optischen Ventil 14 abwechselnd lichtdurchlässig und -undurchlässig geschaltet. Dadurch werden über die optische Strecke 30 die von der rechten optischen Strecke 6 stammenden Videobilder dem rechten Auge 32 des Betrachters zugeführt, während die von der linken optischen Strecke 7 gelieferten Videobilder über die optische Strecke 31 dem linken Auge 33 des Betrachters zugeführt werden. Auch hier erfolgt die Umschaltung so schnell, daß sie von den Augen nicht wahrgenommen wird. Die erfindungsgemäße Anordnung benötigt lediglich eine Videokamera 1 und eine Wiedergabeeinrichtung 4, um stereoskopische Bilder übertragen zu können. Da auf der Empfängerseite eine Wiedergabeeinrichtung 4 genügt, ist es auch möglich, sie an einer Halterung zu befestigen, die der Betrachter auf seinem Kopf tragen kann, wie sie in der älteren Anmeldung nach DE-OS 35 34 152 (W.Andrich 10X) beschrieben ist.

## Ansprüche

1. Anordnung zum Übertragen stereoskopischer Videobilder, die folgende Bestandteile aufweist:

a. eine Videokamera (1), die mit einer Wiedergabeeinrichtung (4) verbunden ist,

b. zwei optische Strecken (6, 7), über die von zwei verschiedenen Punkten aus aufgenommene Abbildungen des zu betrachtenden Objekts zu dem Objektiv (5) der Videokamera (1) gelangen,

c. eine der Wiedergabeeinrichtung (4) nachgeschaltete optische Verzweigung (20), über die die wiedergegebenen Videobilder auf getrennten optischen Strecken (30, 31) zu den beiden Augen (32. 33) eines Betrachters gelangen,

d. ein erstes und ein zweites optisches Ventil (12, 14), die jeweils in einer der beiden optischen Strecken (6. 7) vor der Videokamera (1) liegen und die von einer Steuereinrichtung (16) abwechselnd durchlässig und undurchlässig geschaltet werden.

e. ein drittes und ein viertes optisches Ventil (25, 26). die jeweils in einer der beiden optischen Strecken zwischen der Wiedergabeeinrichtung (4) und den Augen des Betrachters liegen, und die von der Steuereinrichtung (16) synchron mit dem ersten bzw. dem zweiten optischen Ventil (12 bzw. 14) abwechselnd durchlässig und undurchlässig geschaltet werden.

2. Anordnung nach Anspruch 1.dadurch gekennzeichnet, daß die optischen Ventile (12. 14, 30, 31) Flüssigkristallelemente enthalten.

3. Anordnung nach Anspruch 1, dadurch gekennzeichnet, daß die optischen Ventile (12, 14, 30, 31) eine Blei-Lanthan-Zirkonat-Titanat-Keramik enthalten.

4. Anordnung nach Anspruch 1, dadurch gekennzeichnet, daß die Wiedergabeeinrichtung (4) an einer Halterung befestigt ist, die der Betrachter auf seinem Kopf tragen kann.

0 269 075

# EUROPÄISCHER RECHERCHENBERICHT

Nummer der Anmeldung

## EINSCHLÄGIGE DOKUMENTE

EP 87117338.1

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | US - A - 3 821 466 (ROESE) <br> * Zusammenfassung; Fig. 2-4; Spalte 4, Zeile 4 - Spalten 6,Zeile 23 * <br> -- | 1-4 | H 04 N 13/00 |
| X | EP - A2 - 0 107 092 (HONEYWELL) <br> * Fig.1; Seite 2, Zeile 15 - Seite 4, Zeile 3; Seite 9, Anspruch 8 * <br> -- | 1,3,4 | |
| A | FR - A1 - 2 517 916 (THOMSON-CSF) <br> * Fig. 2,3 * <br> -- | 1,4 | |
| A | US - A- 3 670 097 (JONES) <br> * Fig. 1,3 * <br> ---- | 1,4 | |

|  | RECHERCHIERTE SACHGEBIETE (Int. Cl 4) |
|---|---|
| | H 04 N 13/00 <br> H C4 N 15/00 |

Der vorliegende Recherchenbericht wurde für alle Patentansprüche erstellt.

| Recherchenort | Abschlußdatum der Recherche | Prüfer |
|---|---|---|
| WIEN | 03-03-1988 | BENISCHKA |